# EUROPÄISCHE PATENTSCHRIFT

(11) **EP 3 823 886 B1**
(45) Veröffentlichungstag und Bekanntmachung des Hinweises auf die Patenterteilung: **28.02.2024**
(21) Anmeldenummer: 19730319.1
(22) Anmeldetag: 11.06.2019
(51) Int. Cl.: B62J 27/30

(54) **AUFPRALLSCHUTZVORRICHTUNG AN EINEM MOTORISIERTEN ZWEIRAD**
COLLISION PROTECTION DEVICE ON A MOTORIZED BICYCLE
DISPOSITIF DE PROTECTION CONTRE LES CHOCS SUR UN DEUX-ROUES MOTORISÉ

(30) Priorität: 17.07.2018 DE 102018211817
(43) Veröffentlichungstag der Anmeldung: 26.05.2021
(73) Patentinhaber: Bayerische Motoren Werke Aktiengesellschaft, 80809 München (DE)
(72) Erfinder: AUGUSTIN, Stephan, 80804 Muenchen (DE)
(86) Internationale Anmeldenummer: PCT/EP2019/065193
(87) Internationale Veröffentlichungsnummer: WO 2020/015926

(56) Entgegenhaltungen:
- EP-A1- 2 236 400
- EP-A1- 2 236 401
- JP-A- 2002 264 866
- JP-A- 2010 260 372
- US-A1- 2010 148 469

## Beschreibung

Die Erfindung betrifft ein motorisiertes Zweirad mit einer Aufprallschutzvorrichtung, insbesondere ein Motorrad oder Motorroller.

Bei einem Frontalaufprall auf ein Hindernis lässt sich durch das Vorderrad eine wertvolle Vergrößerung des Abstands zwischen Hindernis und Fahrer erreichen. Dies spielt auch eine Rolle bei motorisierten Zweirädern mit Rückhaltesystemen, beispielsweise Sicherheitsgurten, um genügend Zeit zu gewinnen, um die auf den Fahrer wirkenden Kräfte verträglich abbauen zu können.

Problematisch ist dabei jedoch, dass schon kleine Abweichungen der Geradeausstellung des Vorderrads beim Aufprall eine Drehung des Vorderrads bezüglich der Vertikalen bewirken können, was den Abstand verringert.

In der gattungsgemäßen JP 2002 264866 A wird eine schalenförmige Aufnahme vorgeschlagen, in die das Vorderrad bei einem Aufprall hineingedrückt wird und die mit einem stoßdämpfenden Material gefüllt ist.

Die JP 2010 260372 A zeigt eine von Stahlplatten begrenzte schalenförmige Aufnahme für das Vorderrad.

Aufgabe der Erfindung ist es, den Aufprallschutz bei einem motorisierten Zweirad zu verbessern.

Diese Aufgabe wird mit einem motorisierten Zweirad mit einer Aufprallschutzvorrichtung mit den Merkmalen gemäß Anspruch 1 gelöst.

Die Aufnahme sorgt dafür, dass das Vorderrad bei einem Aufprall seine Geradeausstellung beibehält, sich also während des Aufpralls nicht bezüglich der Vertikalen oder um die Lenkachse verdreht. Die Führungsabschnitte verhindern ein seitliches Ausweichen und Verdrehen des Vorderrads. So kann sichergestellt werden, dass bei einem Frontalaufprall der durch das Vorderrad erzielbare Abstand erhalten bleibt.

Die Führungsabschnitte sind jeweils durch ein stabförmiges Bauteil gebildet, beispielsweise einen massiven Stab oder ein Rohr. Ein derartiges Fangelement erzeugt ein geringes Zusatzgewicht und lässt sich optisch unauffällig am Rahmen anbringen, aber dennoch einfach mit der notwendigen Stabilität fertigen.

Selbstverständlich sollten die freien Enden der Führungsabschnitte so angeordnet sein, dass sie im normalen Fahrbetrieb stets einen Abstand zum Umfang des Vorderrads haben, also auch bei starkem Lenkereinschlag nicht in Kontakt mit dem Vorderrad geraten.

Das Einschieben des Vorderrads in die Aufnahme erfolgt vorzugsweise ausschließlich durch die Kraft des Aufpralls, beispielsweise durch eine Verformung einer Vorderradgabel des Zweirads beim Aufprall des Vorderrads auf das Hindernis. Eine aktive Bewegung des Vorderrads oder des Fangelements ist nicht notwendig, sodass es auch nicht erforderlich ist, eine zusätzliche Mechanik zur Bewegung des Vorderrads oder des Fangelements vorzusehen.

Auch eine geringfügige anfängliche Schrägstellung des Vorderrads, also eine Verdrehung um die Vertikale, lässt sich durch eine geeignete Form der Aufnahme und insbesondere der Führungsabschnitte ausgleichen. In diesem Fall stellen die Führungsabschnitte das Vorderrad durch Kontakt während des Einschiebens in die Aufnahme gerade.

Zu diesem Zweck ist die Aufnahme vorteilhaft so ausgebildet, dass sie zum Heck des Zweirads hin zunehmend schmaler wird. Somit wird das Vorderrad automatisch zentriert und geradegestellt, je weiter es sich in die Aufnahme hineinschiebt.

Beispielsweise sind die Führungsabschnitte in einem Winkel zueinander positioniert, der sich zu den freien Enden der Führungsabschnitte hin öffnet. Die Aufnahme kann sich zu den freien Enden der Führungsabschnitte hin v-förmig öffnen. Ein Öffnungswinkel zwischen 50° und 90°, insbesondere zwischen 60° und 80°, hat sich als geeignet erwiesen.

Wenn sich das Vorderrad geradestellt, wird in gewissem Maß auch die Vorderradgabel, an der das Vorderrad aufgehängt ist, geradegestellt oder zumindest an einer weiteren Verdrehung bezüglich der Vertikalen während des Aufpralls gehindert.

Ein Kontakt zwischen Vorderrad und Fangelement kann ausschließlich an den Führungsabschnitten stattfinden. Es wäre aber auch denkbar, zwischen den Führungsabschnitten (bezogen auf eine Querrichtung des Zweirads) einen Kontaktabschnitt vorzusehen, der der zusätzlichen Krafteinleitung in den Rahmen dient, falls das Vorderrad so weit in die Aufnahme eingeschoben wird, dass es am Kontaktabschnitt anliegt. Ansonsten erfolgt wie herkömmlich eine Krafteinleitung in den Rahmen hauptsächlich über die Vorderradgabel.

Das Fangelement sollte jedoch in jedem Fall aus Metall und so starr und formstabil ausgebildet sein, dass es sich bei einem Frontalaufprall im Wesentlichen nicht verformt, da es die beim Aufprall wirkenden Kräfte aufnehmen muss, um das Vorderrad zu führen und geradezustellen. Das bedeutet, das Fangelement muss ohne plastische Verformung Seitenkräfte von wenigstens 1000 N aufnehmen können.

In einer bevorzugten Ausführungsform sind die beiden Führungsabschnitte an ihrem dem freien Ende entgegengesetzten Ende an einem Befestigungsabschnitt fixiert, mit dem das Fangelement am Rahmen des Zweirads befestigt ist. Über die Länge des Befestigungsabschnitts lässt sich einfach ein Abstand der Aufnahme zum Rahmen sowie zum Vorderrad festlegen, ohne dass dies Einfluss auf die Länge der Aufnahme in Längsrichtung und damit den Abstand der freien Enden der Aufnahme in Querrichtung hätte.

Das Fangelement kann einstückig ausgebildet sein. Befestigungsabschnitt und Führungsabschnitte können aber auch aus separaten Teilen zusammengesetzt sein, beispielsweise geschweißt. Es wäre auch denkbar, das Fangelement einstückig mit dem Rahmen auszubilden. Optional lässt sich das Fangelement in eine Verkleidung des Rahmens integrieren, es sollte aber stets so stabil mit dem Rahmen verbunden sein, dass es die beim Aufprall wirkenden Kräfte ohne wesentliche Verformung aufnehmen kann.

Bevorzugt ist das Fangelement auf Höhe eine Achse des Vorderrads am Rahmen befestigt. Insbesondere der Befestigungsabschnitt ist vorteilhaft im normalen Fahrbetrieb horizontal ausgerichtet, sodass Aufprallkräfte geradlinig vom Kontaktpunkt zwischen Hindernis und Vorderrad über den Befestigungsabschnitt entlang der Längsrichtung des Zweirads in den Rahmen eingeleitet werden können.

Als weitere Maßnahme zur Verbesserung des Aufprallschutzes kann außerdem eine Felge des Vorderrads aus einem Material gefertigt sein, das sich bei einem Aufprall, bei dem das Vorderrad in die Aufnahme des Fangelements geschoben wird, verformt, ohne zu brechen. So lässt sich ein weiterer Energieabbau erreichen. Das verwendete Material sollte der Felge eine geringere Federwirkung verleihen, als dies bei einem gespeichten Vorderrad der Fall ist, sollte aber zu einem größeren Maß verformbar sein als ein Gussmaterial. Geeignet sind beispielsweise Aluminiumlegierungen. Eine derartige Felge lässt sich natürlich auch unabhängig von der Verwendung eines oben beschriebenen Fangelements einsetzen.

Das Fangelement ist vorzugsweise eine direkt am Rahmen angeschweißte, horizontal liegende Gabel mit zwei nach vorne weisenden, voneinander weg weisenden Zinken, die zwischen sich das Vorderrad aufnehmen können, wie in den nachfolgenden Zeichnungen gezeigt.

Die Erfindung wird nachfolgend anhand eines Ausführungsbeispiels und mit Bezug auf die beigefügten Zeichnungen näher beschrieben. In den Zeichnungen zeigen:
- Figur 1 eine schematische Draufsicht auf ein motorisiertes Zweirad in einer normalen Fahrsituation kurz vor einem Frontalaufprall auf ein Hindernis;
- Figur 2 das Zweirad aus Figur 1 während eines Frontalaufpralls auf ein Hindernis;
- Figur 3 eine schematische Seitenansicht eines motorisierten Zweirads mit einer erfindungsgemäßen Aufprallschutzvorrichtung in einer normalen Fahrsituation kurz vor einem Frontalaufprall auf ein Hindernis;
- Figur 4 eine schematische Draufsicht auf die erfindungsgemäße Aufprallschutzvorrichtung während einer normalen Fahrsituation; und
- Figur 5 die erfindungsgemäße Aufprallschutzvorrichtung aus Figur 5 während eines Frontalaufpralls.

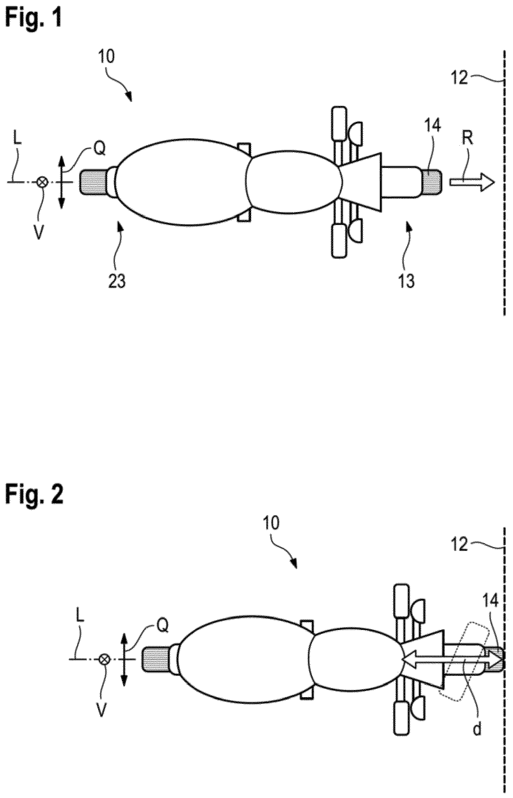

Die Figuren 1 und 2 verdeutlichen die Problematik eines Frontalaufpralls bei einem motorisierten Zweirad 10 bei einem Aufprall auf ein Hindernis 12 entlang einer Fahrbewegung in Längsrichtung L des Zweirads 10. Dies ist durch den Pfeil in Figur 1 verdeutlicht, der die Fahrtrichtung R bei Geradeausfahrt angibt.

Der Kontakt mit dem Hindernis 12 erfolgt an einer Front 13 des Zweirads 10 an der Vorderseite eines Vorderrads 14 (Figur 2). Trifft das Vorderrad 14 in seiner Geradeausstellung parallel zur Längsrichtung L des Zweirads 10 auf das Hindernis 12, schafft es einen Abstand d zwischen dem Hindernis 12 (genauer gesagt dem Kontaktpunkt zwischen Vorderrad 14 und Hindernis 12) und dem Fahrer des Zweirads 10 (nicht dargestellt). Trifft bei einem konventionellen Zweirad das Vorderrad 14 jedoch in einem Winkel auf das Hindernis 12, so kann es vorkommen, dass sich das Vorderrad 14 um die Vertikale V verdreht, also in Querrichtung Q schrägstellt, was den Abstand d reduziert. Diese Situation ist in Figur 2 mit gestrichelten Linien dargestellt.

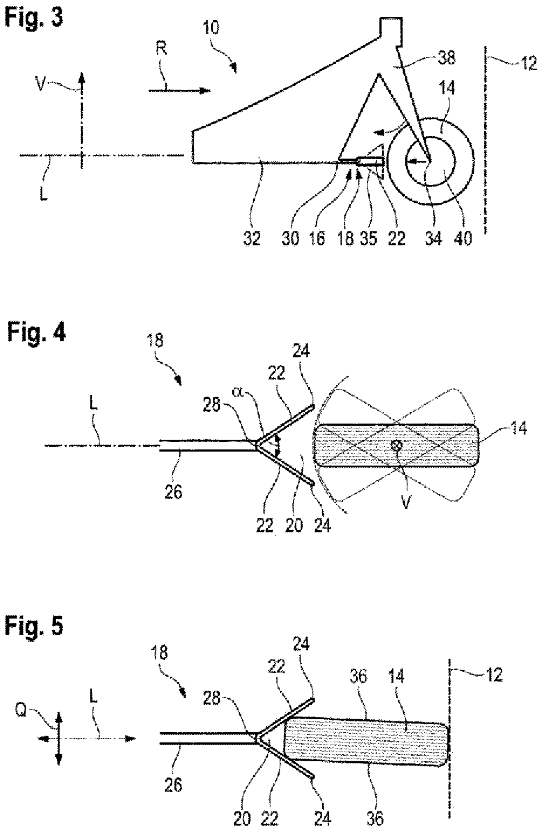

Um ein derartiges Verdrehen des Vorderrads 14 zu verhindern, ist eine Aufprallschutzvorrichtung 16 vorgesehen. Dies zeigt Figur 3.

Die Aufprallschutzvorrichtung 16 umfasst ein Fangelement 18, das eine Aufnahme 20 aufweist, die zum Vorderrad 14 hin geöffnet ist. Die Aufnahme 20 wird von zwei Führungsabschnitten 22 begrenzt (siehe Figuren 4 und 5), die jeweils ein freies Ende 24 haben, das in Fahrtrichtung R dem Vorderrad 14 benachbart ist.

Die beiden Führungsabschnitte 22 sind hier so angeordnet, dass sich die Aufnahme 20 entgegen der Fahrtrichtung R in Richtung zu einem Heck 23 des Zweirads verjüngt. In diesem Beispiel sind die beiden Führungsabschnitte 22 in einem Winkel α zueinander angeordnet, der sich zum Vorderrad 14 hin öffnet. Der Winkel α beträgt hier zwischen 60° und 80°, könnte aber allgemein beispielsweise zwischen 50° und 90° liegen.

Die beiden Führungsabschnitte 22 sind in diesem Beispiel mit einem Befestigungsabschnitt 26 verbunden, der hier im Scheitelpunkt des Winkels α in die beiden Führungsabschnitte 22 übergeht. Im Übergang der beiden Führungsabschnitte 22 in den Befestigungsabschnitt 26 kann optional ein Kontaktabschnitt 28 vorgesehen sein.

Das der Aufnahme 20 abgewandte Ende des Befestigungsabschnitts 26 ist an einem Fixierpunkt 30 fest mit einem Rahmen 32 des Zweirads 10 verbunden, beispielsweise durch Schweißen (siehe Figur 3).

Das Fangelement 18 ist so ausgerichtet, dass der Befestigungsabschnitt 26 entlang der Längsrichtung L ausgerichtet ist und sich (bei normaler aufrechter Fahrzeugposition) horizontal erstreckt. Der Fixierpunkt 30 des Befestigungsabschnitts 26 am Rahmen 32 liegt hier, bezogen auf die Vertikalrichtung V, auf gleicher Höhe wie eine Achse 34 des Vorderrads 14.

In der hier gezeigten Ausführungsform sind die beiden Führungsabschnitte 22 durch geradlinig verlaufende Stäbe gebildet. Die Aufnahme 20 öffnet sich daher v-förmig zum Vorderrad 14 hin.

Der Befestigungsabschnitt 26 ist hier ebenfalls ein stabförmiges Bauteil. Der Durchmesser der Führungsabschnitte 22 entspricht hier in etwa dem Durchmesser des Befestigungsabschnitts 26.

Sowohl die Führungsabschnitte 22 als auch der Befestigungsabschnitt 26 können massiv oder hohl in Form von Rohren ausgebildet sein.

In einer anderen möglichen , nicht zur Erfindung gehörenden Variante ist an jedem der Führungsabschnitte 22 eine Führungsfläche 35 vorgesehen, die sich im Wesentlichen parallel zur Vertikalen V erstreckt, sodass die Aufnahme 20 das Vorderrad 14 über einen größeren Bereich umgreifen kann, wenn das Vorderrad 14 in die Aufnahme 20 hineingeschoben wird (angedeutet in Figur 3).

In allen normalen Fahrsituationen sind die freien Enden 24 der Führungsabschnitte 22 vom Vorderrad 14 so weit beabstandet, dass das Vorderrad 14 in jede beliebige Lenkstellung gebracht werden kann, ohne dass dessen Umfang mit den Führungsabschnitten 22 in Kontakt kommt. Im normalen Fahrbetrieb entfaltet daher das Fangelement 18 keinerlei Wirkung. Wie Figur 4 zeigt, kann das Vorderrad 14 um die Vertikalrichtung V verdreht werden, ohne dass es zu einem Kontakt mit dem Fangelement 18, insbesondere mit den freien Enden 24 der Führungsabschnitte 22, kommt.

Erfolgt jedoch ein Frontalaufprall und trifft das Vorderrad 14 auf das Hindernis 12, so wird, wie in Figur 5 dargestellt, das Vorderrad 14 über die freien Enden 24 hinaus in die Aufnahme 20 hineingeschoben, sodass die Führungsabschnitte 22 in Querrichtung Q betrachtet neben den Seiten 36 des Vorderrads 14 liegen.

Diese Bewegung erfolgt beispielsweise, indem eine Vorderradgabel 38 des Zweirads 10, an der das Vorderrad 14 aufgehängt ist, entgegen der Fahrtrichtung R verformt wird, wie dies herkömmlich bekannt ist (siehe Pfeil in Figur 3).

Das Vorderrad 14 kommt auf einer oder auf beiden Seiten 36 in Kontakt mit einem oder beiden der Führungsabschnitte 22 an deren die Aufnahme 20 begrenzenden Seiten und wird durch die Führungsabschnitte 22 in die Aufnahme 20 hineingeleitet.

Aufgrund der Form und Anordnung der Führungsabschnitte 22 wird das Vorderrad 14 dabei im Wesentlichen in seiner Geradeausstellung gehalten oder, falls es zu Beginn des Kontakts mit dem Hindernis 12 eine leichte Schrägstellung hatte, wird das Vorderrad 14 durch die beiden Führungsabschnitte 22 geradegestellt. Hierbei kann es zu einer Abweichung von etwa +/- 3° von der exakten Geradeausstellung kommen, ohne dass der Abstand d nennenswert beeinträchtigt wird.

Das gesamte Fangelement 18 ist so formstabil ausgebildet, dass es bei den beim Aufprall herrschenden Kräften nicht wesentlich verformt wird und nach Möglichkeit über den gesamten Aufprallvorgang hinweg das Vorderrad 14 in seiner Geradeausstellung stabilisieren und halten kann.

Optional kann das Vorderrad 14 in Anlage an den Kontaktabschnitt 28 kommen, um eine besonders hohe Aufprallkraft direkt in den Rahmen 32 einleiten zu können.

Aufgrund der Anordnung der Achse 34 des Vorderrads 14, des Befestigungsabschnitts 26 und des Fixierpunkts 30 des Fangelements 18 am Rahmen 32 entlang der Horizontalen werden die Aufprallkräfte entlang der Längsrichtung L des Zweirads 10 möglichst ohne Kraftkomponente in Querrichtung Q oder Vertikalrichtung V in den Rahmen 32 des Zweirads 10 eingeleitet.

Eine Felge 40 des Vorderrads 14 ist hier aus einem Material gebildet, dass sich bei der Kraftwirkung durch einen Frontalaufprall, bei dem das Vorderrad 14 in die Aufnahme 20 hineingeschoben wird, gezielt verformt, um einen Teil der Aufprallenergie abzubauen.

Das Material ist so gewählt, dass es weniger federnd ist als dies bei einem gespeichten Vorderrad der Fall wäre und so, dass es bei der Kraft eines derartigen Aufpralls nicht zerbricht. Hierfür kommen beispielsweise bekannte zähe Aluminiumlegierungen infrage.

Durch die Verformung der Felge 40 in Kombination mit der Wirkung des Fangelements 18, das Vorderrad 14 in der Geradeausstellung zu halten, kann ein Teil der Aufprallenergie gezielt abgebaut werden, während gleichzeitig sichergestellt ist, dass das Vorderrad 14 sich auch während der Verformung der Felge 40 nicht schrägstellen kann. Dies bietet eine deutliche Verbesserung der Sicherheit beispielsweise bei helmbefreiten Fahrzeugen mit Sicherheitsgurten.

Eine derartige Felge 40 kann natürlich auch unabhängig von einer hier beschriebenen Aufprallschutzvorrichtung 16 eingesetzt werden.

## Patentansprüche

1. Motorisiertes Zweirad (10) mit einer Aufprallschutzvorrichtung (16) mit einem Fangelement (18), das fest an einem Rahmen (32) des Zweirads (10) angeordnet ist und das eine von zwei Führungsabschnitten (22) begrenzte Aufnahme (20) aufweist, die in Richtung zu einem Vorderrad (14) des Zweirads (10) geöffnet ist, wobei die freien, in Fahrtrichtung (R) weisenden Enden (24) der Führungsabschnitte (22) so angeordnet sind, dass sie im normalen Fahrbetrieb stets vom Vorderrad (14) beabstandet sind, sich aber bei einem Frontalaufprall, bei dem das Vorderrad (14) auf ein Hindernis (12) auftrifft, das Vorderrad (14) über die freien Enden (24) hinaus in Richtung zum Rahmen (32) des Zweirads (10) in die Aufnahme (20) einschiebt, **dadurch gekennzeichnet, dass** die Führungsabschnitte (22) jeweils durch ein stabförmiges Bauteil gebildet sind.

2. Motorisiertes Zweirad (10) nach Anspruch 1, **dadurch gekennzeichnet, dass** die Aufnahme (20) zu einem Heck (23) des Zweirads (10) hin zunehmend schmaler wird.

3. Motorisiertes Zweirad (10) nach einem der vorhergehenden Ansprüche, **dadurch gekennzeichnet, dass** sich die Aufnahme (20) zu den freien Enden (24) der Führungsabschnitte (22) V-förmig zum Vorderrad (14) öffnet.

4. Motorisiertes Zweirad (10) nach einem der vorhergehenden Ansprüche, **dadurch gekennzeichnet, dass** das Fangelement (18) so starr ausgebildet ist, dass es sich bei einem Frontalaufprall im Wesentlichen nicht verformt.

5. Motorisiertes Zweirad (10) nach einem der vorhergehenden Ansprüche, **dadurch gekennzeichnet, dass** die Führungsabschnitte (22) an ihrem dem freien Ende (24) entgegengesetzten Ende an einem Befestigungsabschnitt (26) fixiert sind, mit dem das Fangelement (18) am Rahmen (32) befestigt ist.

6. Motorisiertes Zweirad (10) nach einem der vorhergehenden Ansprüche, **dadurch gekennzeichnet, dass** das Fangelement (18) bezogen auf die Vertikale (V) auf Höhe einer Achse (34) des Vorderrads (14) am Rahmen (32) befestigt ist.

7. Motorisiertes Zweirad (10) nach einem der vorhergehenden Ansprüche, **dadurch gekennzeichnet, dass** eine Felge (40) des Vorderrads (14) aus einem Material gefertigt ist, das sich bei einem Aufprall, bei dem das Vorderrad (14) in die Aufnahme (20) des Fangelements (18) geschoben wird, verformt, ohne zu brechen.

## Claims

1. Motorized bicycle (10) with a collision protection device (16) with a catching element (18), which is arranged fixedly on a frame (32) of the bicycle (10) and has a receptacle (20), which is delimited by two guide portions (22) and is open in the direction of a front wheel (14) of the bicycle (10), wherein the free ends (24), which point in the direction of travel (R), of the guide portions (22) are arranged so as to always be spaced apart from the front wheel (14) during normal riding operation, but in the event of a frontal collision in which the front wheel (14) strikes an obstacle (12), the front wheel (14) is pushed beyond the free ends (24) in the direction of the frame (32) of the bicycle (10) into the receptacle (20), **characterized in that** the guide portions (22) are formed in each case by a rod-like component.

2. Motorized bicycle (10) according to Claim 1, **characterized in that** the receptacle (20) becomes increasingly narrow towards a rear (23) of the bicycle (10) .

3. Motorized bicycle (10) according to either of the preceding claims, **characterized in that** the receptacle (20) opens towards the free ends (24) of the guide portions (22) in a V-shaped manner towards the front wheel (14).

4. Motorized bicycle (10) according to one of the preceding claims, **characterized in that** the catching element (18) is designed to be sufficiently rigid that it does not substantially deform in the event of a frontal collision.

5. Motorized bicycle (10) according to one of the preceding claims, **characterized in that** the guide portions (22) are fixed, at their end opposite the free end (24), to a fastening portion (26), which is used to fasten the catching element (18) to the frame (32).

6. Motorized bicycle (10) according to one of the preceding claims, **characterized in that** the catching element (18) is fastened to the frame (32) at the height of an axle (34) of the front wheel (14) relative to the vertical (V).

7. Motorized bicycle (10) according to one of the preceding claims, **characterized in that** a rim (40) of the front wheel (14) is manufactured from a material that, in the event of a collision in which the front wheel (14) is pushed into the receptacle (20) of the catching element (18), deforms without breaking.

## Revendications

1. Deux-roues motorisé (10) avec un dispositif de protection contre les chocs (16) avec un élément de capture (18) qui est agencé de manière fixe sur un cadre (32) du deux-roues (10) et qui présente un logement (20) délimité par deux sections de guidage (22) qui est ouvert en direction d'une roue avant (14) du deux-roues (10), les extrémités libres (24) des sections de guidage (22), orientées dans le sens de la marche (R), étant agencées de telle manière qu'elles sont toujours espacées de la roue avant (14) en mode de conduite normal, mais lors d'un choc au cours duquel la roue avant (14) heurte un obstacle (12), la roue avant (14) s'insère dans le logement (20) au-delà des extrémités libres (24) en direction du cadre (32) du deux-roues (10), **caractérisé en ce que** les sections de guidage (22) sont formées chacune par un composant en forme de barre.

2. Deux-roues motorisé (10) selon la revendication 1, **caractérisé en ce que** le logement (20) devient de plus en plus étroit vers un arrière (23) du deux-roues (10).

3. Deux-roues motorisé (10) selon l'une quelconque des revendications précédentes, **caractérisé en ce que** le logement (20) s'ouvre en forme de V vers les extrémités libres (24) des sections de guidage (22) vers la roue avant (14).

4. Deux-roues motorisé (10) selon l'une quelconque des revendications précédentes, **caractérisé en ce que** l'élément de capture (18) est réalisé sous forme rigide de manière à ne pas se déformer essentiellement en cas de choc frontal.

5. Deux-roues motorisé (10) selon l'une quelconque des revendications précédentes, **caractérisé en ce que** les sections de guidage (22) sont fixées à leur extrémité opposée à l'extrémité libre (24) à une section de fixation (26) par laquelle l'élément de capture (18) est fixé au cadre (32).

6. Deux-roues motorisé (10) selon l'une quelconque des revendications précédentes, **caractérisé en ce que** l'élément de capture (18) est fixé au cadre (32) à hauteur d'un axe (34) de la roue avant (14) par rapport à la verticale (V).

7. Deux-roues motorisé (10) selon l'une quelconque des revendications précédentes, **caractérisé en ce qu'**une jante (40) de la roue avant (14) est fabriquée dans un matériau qui se déforme sans se rompre lors d'un choc au cours duquel la roue avant (14) est poussée dans le logement (20) de l'élément de capture (18).
